# DEMANDE DE BREVET EUROPEEN

(11) **EP 0 844 495 A1**
(43) Date de publication de la demande: **27.05.1998**
(21) Numéro de dépôt: 96402541.5
(22) Date de dépôt: 26.11.1996
(51) Int. Cl.: G01S 7/495, G01S 17/02

(54) **Dispositif de détection d'organes optiques pointés sur le dispositif**

(71) Demandeur: MATRA DEFENSE, 75116 Paris (FR)
(72) Inventeur: Bardon, Dominique, 91370 Verrieres le Buisson (FR); Bernier, Joel, 92160 Antony (FR)
(74) Mandataire: Fort, Jacques

(57) **Abrégé**

Le dispositif comprend une voie d'émission et une voie de réception. La voie d'émission a une source (10) d'impulsions de lumière monochromatique dans le visible ou l'infrarouge, une optique (12) de collimation de la lumière de la source suivant un faisceau ayant une ouverture angulaire déterminée. La voie de réception a une matrice de photo-détecteurs (22) munie d'une optique (18) de focalisation de l'ensemble du champ de vision sur la matrice de photo-détecteurs et des moyens permettant de commander le mécanisme de balayage et d'analyser les signaux de sortie de la matrice de photo-détecteurs.

## Description

L'invention concerne de façon générale les dispositifs de surveillance destinés à être montés sur un porteur équipé pour effectuer une détection active d'organes optiques pointés sur le dispositif et présentant une surface équivalente importante ce qui est notamment le cas des organes ayant une optique de focalisation sur un élément présentant une réflectivité dans le spectre visible ou infrarouge. Elle présente de nombreuses applications dans le domaine militaire, où la détection précoce d'organes optiques pointés vers le porteur, pouvant appartenir à des conduites de tir, à des télémètres, à des systèmes de visée, etc, est un élément important de sécurité.

Le dispositif utilise le fait que les organes optiques du genre définis ci-dessus présentent, vus de l'objectif qu'elle visent, une surface équivalente laser élevée due à la rétroréflexion dans le plan focal, où se trouve généralement un élément tel qu'un réticule gravé sur un support matériel, une matrice de détecteurs, etc...

Une solution qui vient à l'esprit consiste, sur les porteurs munis d'un télémètre laser comportant une diode laser émettrice et une photodiode réceptrice à avalanche, à balayer angulairement le domaine à surveiller. Mais un tel dispositif présente de nombreux inconvénients, dont le principal est que chaque détection correspond à un point unique et donc que la surveillance exige un système de balayage opto-mécanique complexe et de plus gyrostabilisé lorsque le porteur est un véhicule. On connaît également des systèmes exigeant des lasers puissants (FR-A-2 535 466 et 2 505 505).

La présente invention vise notamment à fournir un dispositif de détection ayant un champ de vision important et une résolution élevée, et cela sans exiger un système de balayage opto-mécanique rapide et complexe.

Dans ce but l'invention propose un dispositif notamment suivant la revendication 1.

Les moyens d'analyse peuvent être prévus pour fournir une image de la zone éclairée sur un dispositif de visualisation et/ou pour repérer les points de l'image dont la brillance dépasse celle de l'environnement d'un seuil déterminé.

Lorsque le porteur est un véhicule, la stabilisation de l'image peut être réalisée de façon relativement simple à l'aide d'un miroir unique placé sur un trajet commun des faisceaux d'aller vers la zone et de retour à partir de la zone. Ce miroir peut être celui classiquement prévu sur une lunette de visée gyrostabilisée qui est classiquement prévue sur les véhicules de combat. On donne ainsi à cette lunette une fonction de surveillance s'ajoutant à ses fonctions habituelles.

La matrice de photo-détecteurs sera généralement constituée par une matrice d'éléments à couplage de charge, dits CCD. La faible ouverture de l'optique de formation d'image de la zone, liée à la recherche d'une résolution élevée se traduisant par un éclairement direct faible des éléments. En conséquence, un intensificateur de lumière est avantageusement interposé entre l'optique de formation d'image et la matrice de photo-détecteurs. Pour éviter la distorsion, l'intensificateur est avantageusement à focalisation de proximité à galette de microcanaux et à sortie sur fibres optiques.

Pour réduire le bruit de fond dû à l'éclairage ambiant, des moyens d'obturation seront prévus de façon à n'éclairer la matrice de photo-détecteurs que pendant l'intervalle de temps correspondant au trajet de l'impulsion de lumière vers une cible située dans une plage de distance à explorer et de retour depuis la cible. Cet obturateur peut notamment être constitué par l'intensificateur de lumière évoqué ci-dessus. Mais, quel que soit l'obturateur, il permet également, par un choix approprié de la plage de distance de détection, d'éviter qu'un écho laser sur un obstacle à une distance inférieure à la plage prévue ne provoque une fausse alarme.

Dans un mode avantageux de réalisation de l'invention, le dispositif est constitué pour explorer en distance la zone d'observation, ce qui permet notamment d'effectuer une discrimination de distance et d'éviter les échos parasites sur l'environnement. Cette discrimination est effectuée alors à l'aide de l'obturateur, qui limite l'intégration de lumière sur les photo-détecteurs à une durée brève et à partir d'un instant qui succède au moment où une impulsion de lumière d'éclairage est émise, et après un délai correspondant à un temps de parcours aller retour estimé de la lumière vers les organes optiques à détecter.

L'obturateur, à condition d'être de type rapide, permet au surplus d'accumuler les éclairements dus à plusieurs impulsions laser entre deux lectures successives de la matrice, ce qui accroît le rapport signal à bruit. Lorsqu'on utilise une telle accumulation, on peut optimiser le rapport signal à bruit en augmentant le nombre des impulsions laser intégrées pour les fenêtres temporelles correspondant aux plages de distance éloignées.

Lorsque la voie de réception est sensible en infrarouge, ce qui est le cas général, elle peut être utilisée seule pour la vision de nuit : c'est notamment le cas lorsqu'elle incorpore un intensificateur de lumière. Inversement, le dispositif suivant l'invention peut être réalisé par adaptation d'équipements existants de vision de nuit et adjonction de la voie d'émission.

Le dispositif est aisément adaptable à toute utilisation particulière, du fait du nombre important de paramètres sur lesquels il est possible d'agir, tels que le nombre d'impulsions accumulé sur la matrice avant lecture, la largeur de la fenêtre temporelle de détection et la largeur de la zone dont l'image est formée.

L'invention sera mieux comprise à la lecture de la description qui suit d'un mode particulier de réalisation, donné à titre d'exemple non-limitatif. La description fera apparaître d'autres dispositions encore, avantageusement utilisables en liaison avec les précédentes, mais pouvant l'être indépendamment. La description se réfère aux dessins qui l'accompagnent, dans lesquels :
- la figure 1 est un schéma synoptique d'un dispositif ;
- la figure 2 est un chronogramme montrant comment peut être effectuée la discrimination en distance ;
- la figure 3 montre une constitution possible d'un bloc optique de réception associant une matrice de photo-détecteurs à un obturateur rapide constitué par un tube intensificateur d'image.

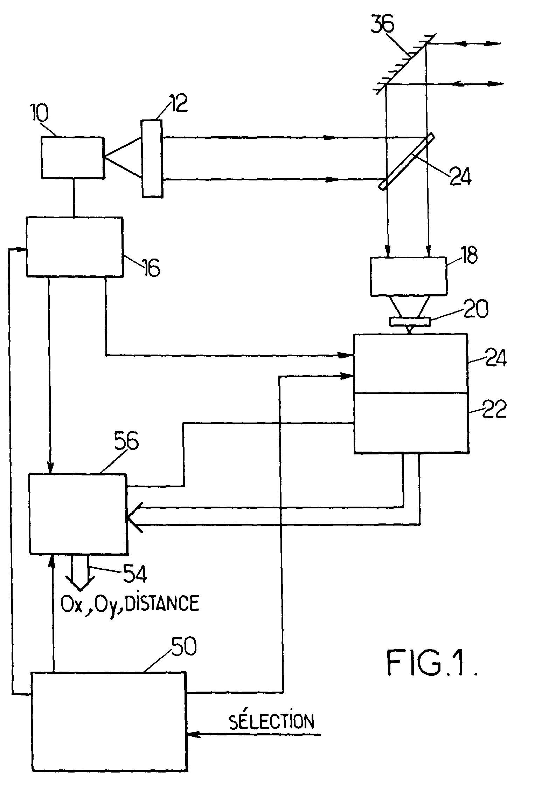

Le dispositif dont la constitution de principe est montrée en figure 1 peut être regardé comme ayant une voie d'émission et une voie de réception. La voie d'émission comporte une source laser pulsée 10 suivie d'une optique de collimation 12. La source laser est commandée par un circuit d'attaque 16.

Pour que la portée du dispositif corresponde aux besoins habituels la source comportera généralement non pas une diode unique, mais une matrice de diodes fonctionnant dans le visible ou, plus fréquemment, dans l'infrarouge proche. On peut notamment utiliser une matrice de diodes en GaAlAs, et un circuit d'attaque 16 pour fournir le courant élevé requis (de l'ordre de 140 A pour une puissance crête de la source d'environ 1 kW).

Lorsque la source est constituée d'une matrice de diodes laser, l'émission de sa surface, qui est généralement d'environ 10 mm² lorsqu'on utilise 100 à 200 diodes, n'est pas uniforme. Ce défaut d'uniformité peut être corrigé en utilisant une optique d'émission 12 présentant des aberrations ou une défocalisation compensatrices ou par l'emploi d'un réseau de micro-lentilles ou d'un réseau de lentilles à gradient d'indice.

La voie de réception comporte une optique de focalisation 18 précédée ou suivie d'un filtre 20 ayant une bande étroite correspondant à la longueur d'onde d'émission de la source 10 (par exemple 800-850 nanomètres dans le cas d'une source GaAlAs). Le filtre 20 peut notamment être un filtre interférentiel.

L'optique 18 forme l'image du champ de vision complet sur une matrice 22 de photo-détecteurs, par l'intermédiaire d'un obturateur 24, destiné à limiter la détection à une plage de distance déterminée.

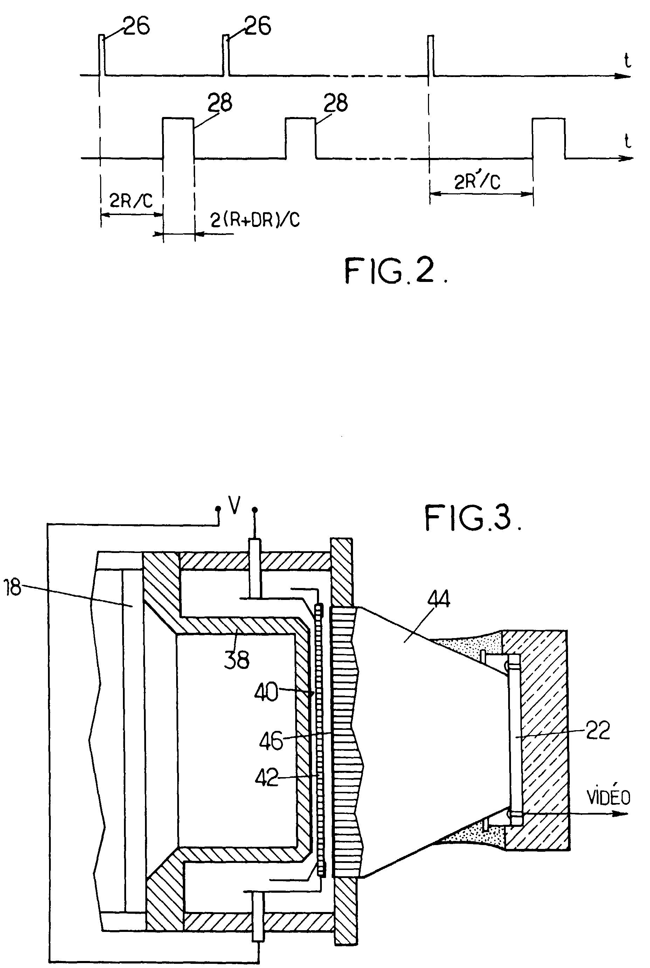

La figure 2 montre, à titre d'exemple, l'échelonnement temporel des impulsions laser émises 26 et des fenêtres temporelles d'ouverture 28 de l'obturateur 24 pour sélectionner une plage de distance comprise entre R et R+ΔR. Sur cette figure 2, c désigne la vitesse de la lumière dans l'air et t désigne le temps.

Pour effectuer une exploration en profondeur, deux images successives de la même zone peuvent être formées en adoptant deux fenêtres temporelles différentes en succession, sans changement d'orientation du faisceau lumineux. La figure 2 montre par exemple la sélection successive de deux tranches de même profondeur, commençant l'une à 2R/c, l'autre à 2R'/c.

L'obturateur électronique permet également d'accumuler les échos dus à plusieurs impulsions successives avant lecture de la matrice, pour accroître le rapport signal à bruit. La figure 2 montre à titre d'exemple l'accumulation de l'éclairement dû à deux impulsions laser 26 successives.

Dans le mode de réalisation montré en figure 1, les voies d'émission et de réception présentent une partie optique commune, en aval du mécanisme de balayage 14 et en amont de l'optique 18. Cette disposition est surtout utile lorsque le dispositif doit être muni de moyens de stabilisation de la ligne de visée, schématisés sous forme d'un miroir gyrostabilisé 36, qui peut être celui d'une lunette de visée optique.

L'obturateur 24 peut avantageusement être constitué par un intensificateur de lumière commandable, tel que celui représenté schématiquement en figure 3. L'intensificateur comporte une fenêtre 38 transparente dans le domaine spectrale utilisé, dont la face arrière est revêtue d'une couche 40 de matériau d'émission d'électrons constituant une photocathode. Un faible espace sépare la photocathode d'une galette de micro-canaux 42 soumise à un champ électrique élevé créé par une tension V. La galette est en contact avec une fenêtre d'entrée 44, en libres optiques, portant sur sa face avant une couche électro-luminescente à rémanence courte 46, ou elle est à faible distance de cette fenêtre. La fenêtre 44 peut être en contact, par l'intermédiaire d'une couche de couplage, avec la matrice de photo-détecteurs 22. En général cette fenêtre aura une forme conique.

Un tel intensificateur peut être utilisé comme obturateur, en pulsant la haute tension V. L'ouverture peut être réduite à un temps très bref, d'environ 1 µs.

Le dispositif comprend encore des moyens de commande des différents composants. Dans le cas présenté sur la figure 1, ces moyens comportent une unité centrale 50 munie d'un terminal d'entrée permettant de sélectionner le nombre d'impulsions accumulées au cours de la formation d'une image sur la matrice 22 avant lecture, le choix des plages de distance explorées, etc.

L'unité 50 peut également fournir au circuit d'attaque 16 les informations nécessaires concernant le nombre d'impulsions à accumuler pour chaque formation d'image. Ce circuit d'attaque peut à son tour commander l'obturateur 24 avec un décalage temporel par rapport à l'impulsion laser qui correspond à la plage de distance à explorer (le nombre de répétition pouvant être fourni par l'unité centrale 50).

Enfin les moyens de commande et d'analyse comporteront généralement une électronique 56 de traitement des échos, commandant la lecture de la matrice et identifiant les points dont la brillance dépasse celle de l'environnement d'un seuil déterminé, donnant par exemple sur une sortie 54 les coordonnées angulaires θₓ, θ_{y} du point détecté et la plage de distance dans laquelle se trouve la cible détectée.

Le dispositif est susceptible de réalisations très diverses. Celle qui sera maintenant donnée ne doit être considérée que comme un exemple. En utilisant une source laser constituée de plusieurs barrettes de diodes laser juxtaposées, on peut assurer une illumination d'un champ instané d'environ 3° en site et 5° en gisement autorisant une détection jusque vers 2500 m. Une telle source peut être pulsée à une cadence de 1 kHz, autorisant 100 impulsions laser en affectant 100 ms à l'exploration de chaque zone en profondeur. On peut cependant utiliser une optique 18 et une matrice de photo-détecteurs correspondant à un champ de vision de 5° en site et de 7,5° en gisement. La durée de lecture de 80x200 pixels peut être aussi faible que 4 ms : en conséquence, il est possible d'effectuer une tomographie par tranches de distance de 100 m à 200 m avec une moyenne de 4 impulsions laser accumulées pour chaque tranche.

Pour optimiser le rapport signal à bruit, il est avantageux de privilégier les distances éloignées en leur affectant un nombre supérieur d'impulsions accumulées. Par exemple, avec des tranches de 250 m à partir de 250 m (pour éviter les réflexions internes et très proches) et jusqu'à 2500m, il est possible d'adopter une durée d'intégration de 1,67 microseconde pour chaque impulsion et d'utiliser la répartition suivante :

| TRANCHE (µs) | NOMBRE D'IMPULSIONS ACCUMULEES | TEMPS DE CYCLE DE LA MATRICE (milliseconde) |
|---|---|---|
| 1.67 | 4 | 4 |
| 1.67 | 4 | 4 |
| 1.67 | 4 | 4 |
| 1.67 | 4 | 4 |
| 1.67 | 6 | 6 |
| 1.67 | 9 | 9 |
| 1.67 | 12 | 12 |
| 1.67 | 25 | 25 |
| 1.67 | 32 | 32 |

La source laser peut être constituée par un empilement de barrettes linéaires de diodes laser émettant à 800-850 nanomètres et dans ce cas on peut utiliser un filtre interférentiel de réception 20 ayant une largeur spectrale de 20 nanomètres.

L'invention est susceptible de nombreuses variantes de réalisation. Par exemple la voie d'émission peut être désolidarisée de la voie de réception. Cette solution permet notamment de constituer la voie de réception par adaptation d'une lunette de vision de nuit déjà prévue. La précision angulaire n'étant fonction que de la voie de réception, elle n'est pas dégradée si seule cette dernière est finement gyrostabilisée. L'invention est aisément adaptable à des besoins particuliers. En limitant le balayage en distance autour d'une position préalablement détectée (ou sur désignation d'objectif), on peut atteindre une précision sur la distance de +/-50m. En acceptant une diminution temporaire de la fréquence de cycle, la portée peut être augmentée. Enfin, on peut augmenter la fréquence d'acquisition à la suite d'une première détection pour obtenir une confirmation d'alarme.

## Revendications

1. Dispositif de détection active d'organes optiques pointés sur le dispositif, caractérisé en ce qu'il comprend : une voie d'émission ayant une source (10) d'impulsions de lumière monochromatique dans le visible ou l'infrarouge constituée par une matrice de diodes ; une optique (12) de collimation de la lumière de la source suivant un faisceau ayant une ouverture angulaire déterminée ; une voie de réception ayant une matrice de photo-détecteurs (22) munie d'une optique (18) de focalisation de l'ensemble du champ de vision sur la matrice de photo-détecteurs ; et des moyens permettant d'analyser les signaux de sortie de la matrice de photo-détecteurs.

2. Dispositif selon la revendication 1, caractérisé en ce qu'il comporte des moyens de stabilisation d'image uniques placés sur un trajet optique commun de la voie d'émission et de la voie de réception éventuellement couplé à un système de visée.

3. Dispositif selon la revendication 1 ou 2, caractérisé en ce que la matrice de photo-détecteurs est constituée par une matrice d'éléments à couplage de charge.

4. Dispositif selon la revendication 1, 2 ou 3, caractérisé en ce qu'il comporte de plus un intensificateur de lumière interposé entre ladite optique de focalisation sur la matrice de photo-détecteurs et ladite matrice.

5. Dispositif selon la revendication 4, caractérisé en ce que ledit intensificateur est utilisable séparément pour la vision de nuit.

6. Dispositif selon la revendication 4 ou 5, caractérisé en ce que les moyens de commande sont également prévus pour commander l'intensificateur de lumière de façon à n'éclairer la matrice de photo-détecteurs à une durée brève et à partir d'un instant qui succède au moment où une impulsion de lumière d'éclairage est émise, et après un délai correspondant à un temps de parcours aller retour estimé de la lumière vers les organes optiques à détecter.

7. Dispositif selon la revendication 6, caractérisé en ce que les moyens de commande et d'analyse sont prévus pour accumuler les échos dus à plusieurs impulsions successives sur la matrice avant lecture de cette dernière.

8. Dispositif selon la revendication 7, caractérisé en ce que les moyens de commande et d'analyse sont prévus pour explorer successivement plusieurs plages de distance en accumulant les échos d'un nombre d'impulsions accru pour les plages les plus éloignées.

9. Dispositif selon l'une quelconque des revendications précédentes, caractérisé en ce que l'optique d'émission est prévue pour présenter des aberrations compensant celles de la matrice de diodes.
